# EUROPEAN PATENT SPECIFICATION

(11) **EP 4 594 622 B1**
(45) Date of publication and mention of the grant of the patent: **01.07.2026**
(21) Application number: 23776984.9
(22) Date of filing: 27.09.2023
(51) Int. Cl.: F03D 13/20, E04H 12/16, E04H 12/12, E04H 12/08, E04C 5/08, E04C 3/34, F03D 13/10, E04H 12/34, B66C 23/32, B66C 23/20

(54) **WIND TURBINE COMPRISING A TOWER AND WIND FARM COMPRISING AT LEAST ONE WIND TURBINE**
WINDTURBINE MIT EIN TURM UND WINDPARK MIT MINDESTENS EINER WINDTURBINE
ÉOLIENNE COMPRENANT UN MÂT ET PARC ÉOLIEN COMPRENANT AU MOINS UNE ÉOLIENNE

(30) Priority: 27.09.2022 EP 22382885; 27.09.2022 EP 22382884
(43) Date of publication of application: 06.08.2025
(73) Proprietor: Nordex Energy SE & Co. KG, 22419 Hamburg (DE); Nordex Energy Spain, S.A.U., 31395 Barasoain (Navarra) (ES)
(72) Inventor: GARCÍA MAESTRE, Iván, 31395 BARASOAIN (NAVARRA) (ES); ÁLVARO GUTIÉRREZ, Pablo, 28033 Madrid (ES); CARRILLO ALONSO, Luis, 28033 Madrid (ES); BIEDMA GARCÍA, Manuel, 28033 Madrid (ES); RUPPEN CAÑÁS, Francisco José, 36316 Pontevedra (ES)
(74) Representative: Pons IP
(86) International application number: PCT/EP2023/076652
(87) International publication number: WO 2024/068702

(56) References cited:
- EP-A1- 3 099 866
- EP-A1- 3 356 280
- DE-A1- 19 647 515
- US-A1- 2022 235 739
- US-B2- 10 865 077

## Description

### OBJECT OF THE INVENTION

The present invention can be included in the technical field of wind turbines.

The wind turbine of the present invention proposes an alternative to conventional wind turbines having a tower which in turn comprises at least a first tower section, an adapter, and optionally a second tower section, wherein a lifting structure configured to lift the second tower section or at least one wind turbine component is attached, at least to the adapter, for bearing the vertical loads of the lifting structure.

### BACKGROUND OF THE INVENTION

The increase in the rated power of wind turbines entails the increase in weights and dimensions of all the turbine components in general, but the following aspects are of special relevance for the assembly costs:
- The height of the tower;
- Diameter of the rotor and weight of the blades-hub unit;
- Weight of the nacelle and subcomponents;
- Weight of the tower sections.

Of the above, the most relevant is the height of the tower, existing already designs of 120 m and more, especially for the assembly of relatively voluminous and heavy components such as the aforementioned: the large overturning moments associated to the increase in height make it necessary to have a high-capacity crane. Usually, conventional cranes supported on the ground like mobile crawler cranes are used and tower cranes -which have been introduced recently as an alternative to the previously mentioned ones- are used for the erection of wind turbines.

Mobile crawler cranes have been the standard solution for the installation of the latest generation of turbines, with a tower height in a range up to 120m. This type of crane can be moved fully assembled between positions under certain assumptions (such as a very low road longitudinal slope and minimum road width of more than 6m). However, if the crane has to be dismantled, a substantial area for the boom assembly and disassembly process will be needed.

Tower cranes provide safe erection of wind turbines with hub heights of 110m or more in low-wind areas. Wind turbines can therefore be erected with wind speeds of up to 18m/s. However, there is a lack of experience of the operators with these new set of cranes and low offer worldwide, as well as uncertainty on the actual installation rates due to insufficient track record; Also, real installation costs are still unknown.

Both solutions, mobile crawler cranes and tower cranes, are limited to heights below 120m not being possible to carry out the assembly of wind turbines up to 180m.

The high costs and the described drawbacks justify the search for alternative means to build wind turbines, including the tower.

Other references as well as the conventional cranes described above are known in the state of the art related to two types of solution:
- Self-climbing systems (understanding as such structures that are supported and raised throughout the tower);
- Bridge-crane type solutions supported on lattices on the ground.

Among the climbing solutions, patent US6868646B2 is known regarding a method and means for erecting a wind turbine tower.

Said means incorporate two structures: a lower one, whereto a hoist cable is fastened at a point close to the lower part, and an upper one, which supports the bridge crane-type structure. The hoist cable passes through a pulley fastened to a suitable fastening point in the tower close to the upper part of each section and it is wound in a winch located on the ground.

The system goes up and down the tower every time a section is assembled. Then, once it has been assembled on top of the lower sections of the tower, the unit is lowered, another section is fastened and it is hoisted again. The lower structure incorporates a wheel/roller system adapted to cooperate with guides situated in the tower.

The self-climbing structures can be light and have reduced dimensions, as they use as support of the weight of the assembled components the tower (or the part of the tower already assembled).

However, the self-climbing structures by pulleys, jacks or similar require some kind of guiding of the structure over the tower to guarantee that there is no interference with the tower during the lifting of the structure. In the case of a conical tower, a typical design of concrete is used, the guiding system becomes complicated, as it requires a spring-type element to guarantee the compression of wheels or rollers on the tower surface and avoid said interference. Alternatively, the climbing is performed by friction between a mechanism disposed on the structure and the tower. In this case, it is again required that the mechanism is capable of adapting to the tower's conical shape.

DE19647515A1 discloses a wind-power unit erection equipment comprising a scissor mechanism in two or more parts with a foot and head, temporarily forming a unit with the tower of the power unit, to which the foot and head are detachably secured. It has two or more hydraulic rams, giving a climbing sequence a-b-c. The jib of the mechanism is equipped with a rope, by which the sections of the tower are successively placed one above the other.

Furthermore, the lattice-based structures are large structures that will require a large number of trucks for their transport. They have the advantage, compared with climbing solutions, that they can be used with any type of tower without the need to vary their design, since it is not necessary to provide them with additional fastening points or supports to fasten the climbing structure.

The wind turbine of the present invention comprises an adapter forming part of a tower which due to its special configuration solves all the previous drawbacks reducing the costs associated to the assembling of the wind turbine.

### DESCRIPTION OF THE INVENTION

The invention is defined by a wind turbine according to claim 1, the wind turbine comprising:
- a foundation;
- the tower which in turn comprises a height, at least a first concrete tower section, the adapter, and
- at least one wind turbine component

wherein the adapter is disposed, on the upper part of the first tower section and below a second tower section or disposed on the upper part of the first tower section and below the at least one wind turbine component; and
wherein the adapter comprises first attaching means configured, in use, to attach a lifting structure to the adapter, wherein the lifting structure is configured to lift the second tower section or the at least one wind turbine component, and wherein the first attaching means are configured to bear, at least partially, the vertical loads of the lifting structure.

Thus configured, the adapter disposed on the first tower section serves as the supporting structure for the lifting structure that then bears the loads related to the weight of the lifting structure and the ones arising during the lifting and assembly of the second tower section or the at least one wind turbine component.

According to the invention, the adapter comprises a lower flange configured to be connected to an upper part of the first tower section, an upper flange configured to be connected to the second tower section or to the at least one wind turbine component and an intermediate wall disposed between the lower flange and the upper flange.

Optionally, the first attaching means comprises outwardly protruding elements with regard to the upper flange and/or the lower flange and/or the intermediate wall.

Optionally, the first attaching means comprise a substantially horizontal upper surface configured, in use, to match with a substantially horizontal lower surface of an auxiliary lifting structure configured to lift the lifting structure to a first position located at a first height along the height of the tower.

Optionally, the first attaching means are disposed radially with regard to an axis of the adapter

Each one of the attaching means comprises a horizontal projection having an axis of symmetry arranged in a radial direction with respect to the axis of the adapter.

Preferably, the first attaching means are disposed on the lower flange.

Also preferably, the first attaching means are disposed on the upper flange.

Also preferably, the first attaching means are disposed on the intermediate wall.

Optionally, the first attaching means comprise at least one upper attaching means disposed in a vicinity of the upper flange and at least one lower attaching means disposed in a vicinity of the lower flange.

Optionally, the first attaching means comprise at least one couple of attaching means spaced apart by a first angle, being the first angles at least 20°.

Optionally, the first attaching means comprise at least two couples of attaching means, the attaching means of each couple of attaching means spaced apart by the first angle, being the first angle greater than 20°, more preferably greater than 30°. Preferably, the attaching means of a first couple of attaching means are spaced apart by a second angle from a second couple of attaching means, the second angle being bigger than the first angle. Preferably, the second angle is greater than 50°, more preferably greater than 65°.

Optionally, each attaching means of the couples of attaching means are asymmetrical with respect to the axis of the adapter.

Optionally, the first attaching means comprises lugs, being preferably horizontal and/or vertical lugs.

Optionally, the adapter further comprises openings configured, in use, to allow the passage of an arm of a telescopic crane or other lifting means fixed to the adapter or to the first tower section or other elements, and configured, in use, to install or dismantle a first auxiliary lifting structure at or from the adapter. Other elements such as wires or an operator can pass through the openings if necessary. Preferably, the telescopic crane or other lifting means are fixed to the interior of the adapter and the arm of the telescopic crane pass through to the external part of the adapter and in consequence of the tower for installing or dismantling the first auxiliary lifting structure.

Preferably, the openings are disposed in the intermediate wall of the adapter.

Optionally, the adapter comprises two openings, each one of them disposed between each couple of attaching means.

Optionally, the adapter further comprises an inner wall which in turn comprises a recess configured, in use, to serve as a support for a ladder.

The invention also relates to a tower comprising a height, at least a first tower section, the adapter described above and optionally a second tower section;
wherein the adapter is disposed on the upper part of the first tower section and below the second tower section or disposed on the upper part of the first tower section and below the at least one wind turbine component.

Optionally, the tower further comprises the first auxiliary lifting structure that is configured to attach the lifting structure to the adapter. Preferably, the first auxiliary lifting structure comprises two auxiliar block sheaves configured to be fixed in the first attaching means of the adapter.
Optionally, the first attaching means configured to attach a lifting structure to the adapter and to bear, at least partially, the vertical loads of the lifting structure, are configured to fix the lifting structure in the tower, in a first position located at a first height along the height of the tower, from where the lifting structure lifts the second tower section or the at least one wind turbine component disposed on the ground.

In a first embodiment, the tower is a full concrete tower and the first height is approximately the height of the first tower section.

In a second embodiment, the tower is a concrete-steel hybrid tower and the first height is approximately the height of the first tower section, further comprising the second tower section, wherein the second tower section is made of steel.

Optionally, in this second embodiment, the tower further comprises first additional attaching means configured to attach the lifting structure to the second tower section and fix the lifting structure additionally in the second tower section, in a second position located at a second height along the height of the tower upper than the first position located at the first height. Thus, the relative movements between an upper end of the second tower section and the lifting structure are prevented. The first and second positions are defined along the height of the tower, defining first and second attaching areas where the lifting structure is fixed to the tower, there being no displacement of the lifting structure.

Preferably, the first additional attaching means comprises holes disposed in the second tower section which, in use, are antagonist to pins disposed on auxiliary arms of the lifting structure.

Optionally, the second tower section comprises openings configured to allow the passage of an arm of the telescopic crane or other lifting means to the adapter and configured to install or dismantle the first auxiliary lifting structure at or from the adapter.

For both of the first and second embodiments described above, the adapter comprises second attaching means for fixing a telescopic crane or other lifting means configured to lift, at least partially, an auxiliary lifting structure to the adapter.

Optionally, the tower further comprises positioning means configured to position the lifting structure to the first tower section and fix the lifting structure additionally in the first tower section, in a third position located at a third height along the height of the tower lower than the first position located at the first height. Thus, overturn moments of the lifting structure are compensated. The third position is defined along the height of the tower, defining a positioning area, there being no displacement of the lifting structure.

Preferably, the first tower section comprises at least two concrete segments and the positioning means are disposed in a region proximate to a horizontal joint between the at least two concrete segments. More preferably, the positioning means comprises holes disposed on horizontal lugs disposed along the first tower section, between two concrete segments, which in use, are antagonist to bolts of the second lifting structure.

Optionally, the tower further comprises connecting means configured to connect the second tower section or the at least one wind turbine component to the adapter. The invention also relates to a wind turbine comprising:
- a foundation;
- the tower described above;
- at least one wind turbine component and optionally at least one additional wind turbine component;
wherein the first attaching means configured to attach a lifting structure to the adapter and to bear the vertical loads of the lifting structure, are configured to fix the lifting structure in the first tower section, in a first position located at a first height along the height of the tower, from where the at least one wind turbine component and optionally the at least one additional wind turbine component are lifted by means of the lifting structure.

In this way, the wind turbine is quickly assembled since the combination of two kind of lifting structures, a first lifting structure and a second lifting structure being the lifting structure described above and supported on the adapter, is particularly beneficial for achieving a fast assembly of wind turbines, in particular in big wind farms, where the first lifting structure is supported on the ground and assembles the heaviest parts of the wind turbine (i.e. the segments comprised by the first tower section) that are closer to the ground and subjected to higher loads, and the second lifting structure attached to the adapter disposed on the first tower section and supported by it is used for the assembly of a lightweight second tower section or at least one wind turbine component which can be part of a subset of wind turbine components.

In a preferred embodiment, the first auxiliary lifting structure is configured to lift the lifting structure to the first position located at a first height along the height of the tower and configured to lift the second lifting structure to the first position located at a first height along the height of the tower, in a single lifting operation, preferably directly from the ground to the first position without any intermediate connections of the second lifting structure to the first tower section. This is differentiating and very advantageous in terms of time (by reducing the number of tower connection operations) and tower cost, as each intermediate connection would increase the cost of the second lifting structure, as local reinforcements and extra material are required in these connection zones. When lifting the second lifting structure to a first position located at a first height along the height of the tower, the first position defines a position from where the second lifting structure can be used to lift and assemble the rest of the sections and/or wind turbine components until the whole wind turbine is assembled.

In the second embodiment, wherein the tower is a "concrete-steel hybrid" tower comprising a first tower section comprising at least two concrete segments and further comprising a second tower section made of steel, and wherein the first height is approximately the height of the first tower section, the second lifting structure lifts the second tower section and the at least one turbine component being part of a subset of wind turbine components for assembling the whole wind turbine.

In the first embodiment, wherein the tower is a "full concrete" tower, the adapter is disposed on the upper part of the first tower section being a concrete tower section, and below the at least one wind turbine component, the at least one wind turbine component being preferably the yaw bearing of the nacelle.

In the second embodiment, wherein the tower is a concrete-steel hybrid tower, the first tower section is a concrete tower section which might comprise multiple concrete tower segments, the second tower section is a steel tower section which might comprise multiple steel tower segments, and an adapter is located on top of the uppermost concrete segment to match the diameter of the upper flange of the concrete segment of the first tower section with the diameter of the lower flange of the second tower section, i.e., the adapter is disposed on the upper part of the first tower section and below the second tower section.

The invention is particularly advantageous for full concrete or hybrid towers, whose diameters can be so large and its concrete segments so heavy that performing the whole assembly of the wind turbine with a self-climbing crane is not efficient in terms of time and material, while a conventional crane supported on the ground might be expensive to reach the targeted heights (above 160m). The self-erecting crane becomes too complex to overcome the problems of the conicity of the tower and requires a heavy structure. In this way, the heaviest components belonging to the first tower section are lifted with the first lifting structure supported on the ground while the second lifting structure is configured to erect the lighter ones belonging to the second tower section and additional wind turbine components. This second lifting structure just needs to be lifted once, which increases the speed of the assembly process. Additionally, the number of connection areas in the tower are minimized (vs. other self-erecting or self-climbing options), hence reducing the product cost, as these areas need to be specifically reinforced to be able to stand higher stresses.

Specifically, the first tower section comprises components with weights up to approximately 350tn, while the second tower section and the wind turbine components comprises components with weights up to approximately 150tn.

Optionally, the first tower section comprises at least one concrete section.

Optionally, the at least one concrete section of the first tower section further comprises light beacons, wherein the light beacons are configured to make the section visible. Preferably, the at least one concrete section comprises four light beacons equidistributed along a circumference of the tower section, allowing the guidance of the second lifting structure along the first tower section when the second lifting structure is lifted along the first tower section.

Optionally, the first tower section comprises at least two concrete sections. Optionally, at least one of the at least two concrete sections of the first tower section comprises light beacons preferably disposed in an upper end of the at least one concrete section.

Optionally, the first tower section further comprises a post-tensioning system.

Optionally, the tower comprises a door, wherein the attaching means of the adapter form an angle between 80° and 100° with respect to the door of the tower, preferably 90°. This facilitates the lifting of the second lifting structure not interfering with the door of the tower.

Preferably, in the case when the first attaching means comprise at least one couple of attaching means spaced apart by a first angle or at least two couples of attaching means, the first couple of attaching means spaced apart by a second angle from a second couple of attaching means, a bisector between the at least one couple of attaching means, or between the first and the second couple of attaching means forms an angle between 80° and 100° with respect to the door of the tower, preferably 90°.

Another object of the invention is a wind farm comprising at least one wind turbine as described above.

### DESCRIPTION OF THE DRAWINGS

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:

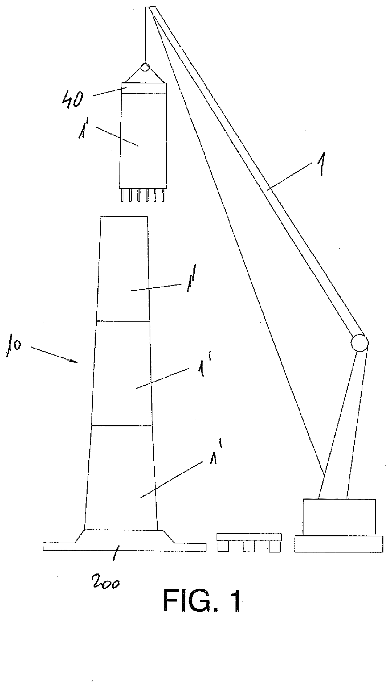

Figure 1 shows the first lifting structure configured to lift the first tower section wherein the second lifting structure is to be attached.
Figure 2 shows a perspective view of the first auxiliary lifting structure disposed on the adapter when the tower is a concrete-steel hybrid tower.
Figure 3 shows a perspective view of the holes disposed on lugs disposed between two concrete segments of the first tower section, acting as positioning means.
Figure 4 shows a perspective view of the first auxiliary lifting structure disposed on the adapter, wherein the lifting structure is attached to the adapter by means of the first auxiliary lifting structure.
Figure 5 shows a bottom perspective view of the lifting structure positioned on the lugs between two concrete segments of the first tower section.

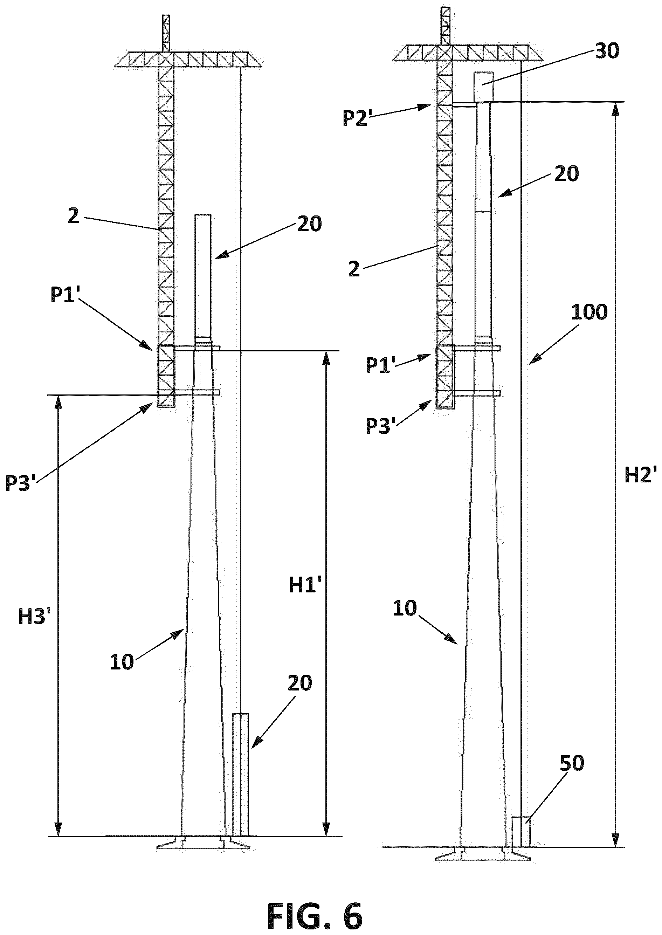

Figure 6 shows the second lifting structure fixed in the first position and configured to lift the second tower section or the at least one wind turbine component carrying out the lifting of the second tower section by means of the second lifting structure fixed in the first position (shown on the left side) and the lifting of the at least one wind turbine component by means of the second lifting structure fixed in the first position and additionally in the second position (shown on the right side). Please note that in both of them, the second lifting structure is fixed in the third position lower to the first position.
Figure 7 shows a telescopic crane configured to lift, at least partially, the auxiliary lifting structure to the adapter.
Figure 8 shows the telescopic crane that is also configured to install or dismantle the first auxiliary lifting structure at or from the adapter, wherein the second tower section comprises openings configured to allow the passage of an arm of the telescopic crane fixed to the adapter.

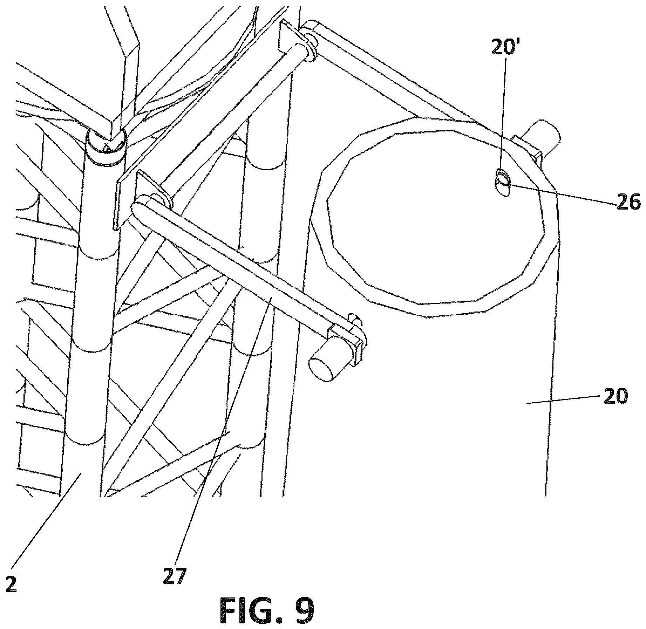

Figure 9 shows the first additional attaching means comprising holes disposed in the steel second tower section which, in use, are antagonist to pins disposed on auxiliary arms of the second lifting structure.
Figure 10 shows a perspective view of an adapter for a full concrete tower.
Figure 11 shows a perspective view of the first auxiliary lifting structure disposed on an adapter disposed on the first tower section when the tower is a full concrete tower.

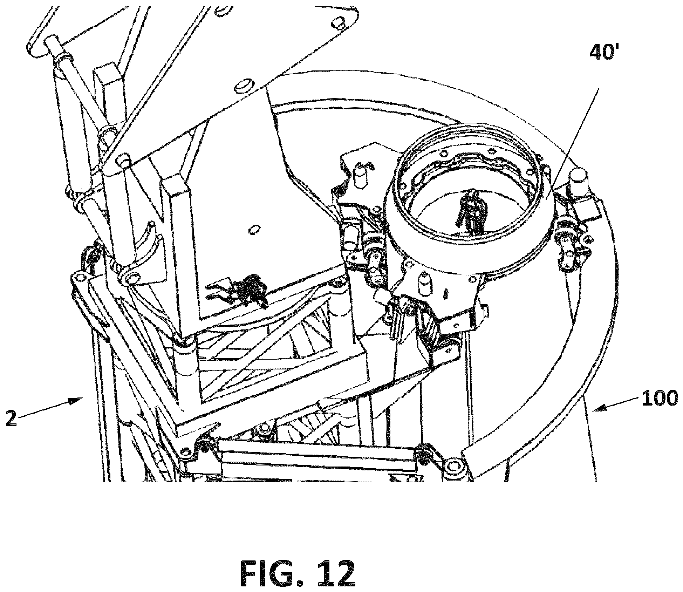

Figure 12 shows a perspective view of the lifting structure attached to an adapter through the first attaching means when the tower is a full concrete tower.
Figure 13 shows a perspective view of the adapter according to another embodiment.

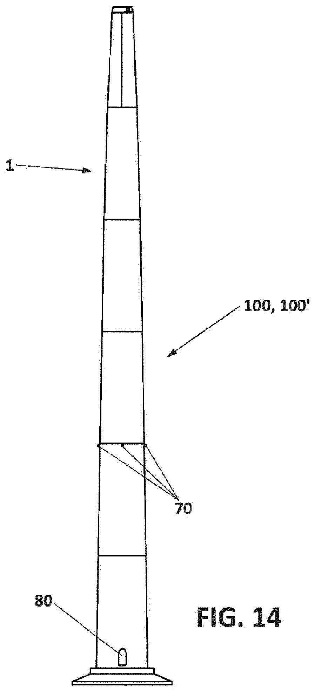

Figure 14 shows the tower comprising the adapter of the present invention, for a full concrete tower in this embodiment.
Figure 15 shows a plan view of Figure 14.

### DETAILED DESCRIPTION OF THE INVENTION

The following is a detailed description of the adapter (40, 40') for a tower (100, 100') of a wind turbine, the wind turbine comprising:
- a foundation (200);
- the tower (100, 100') which in turn comprises a height, at least a first tower section (10), the adapter (40, 40'), and optionally a second tower section (20); and
- at least one wind turbine component (30) and optionally at least one additional wind turbine component (50);
wherein the adapter (40, 40') is disposed, in use, on the upper part of the first tower section (10) and below the second tower section (20) or disposed on the upper part of the first tower section (10) and below the at least one wind turbine component (30); and
wherein the adapter (40, 40') further comprises:
- first attaching means (60, 61, 60', 61') configured, in use, to attach a lifting structure (2) to the adapter (40, 40'), wherein the lifting structure is configured to lift the second tower section (20) or the at least one wind turbine component (30), and wherein the first attaching means (60, 61, 60', 61') are configured to bear, at least partially, the vertical loads of the lifting structure (2).

In another non limiting embodiment, the adapter (40, 40') may comprise:
- positioning means (25) configured to centre the lifting structure (2) with the first tower section (10) in the first position (P1') located at a first height (H1'), and/or
- a first auxiliary lifting structure (3) configured to lift the lifting structure (2) to the first position (P1') located at a first height (H1') along the height of the tower (100, 100').

Optionally, the first attaching means (60, 61, 60', 61') comprise a substantially horizontal upper surface (64, 64') configured, in use, to match with a substantially horizontal lower surface (16, 16') of an auxiliary lifting structure (3) configured to lift the lifting structure (2) to a first position (P1') located at a first height (H1') along the height of the tower (100, 100').

Preferably, the first attaching means (60, 61, 60', 61') are disposed radially with regard to a vertical axis (Y, Y') of the adapter (40, 40').
For both of the embodiments cited above, the adapter (40, 40') comprises a lower flange (41, 41') configured to be connected to an upper part of the first tower section (10), an upper flange (42, 42') configured to be connected to the second tower section (20) or to the at least one wind turbine component (30) and an intermediate wall (43, 43') disposed between the lower flange (41, 41') and the upper flange (42, 42').

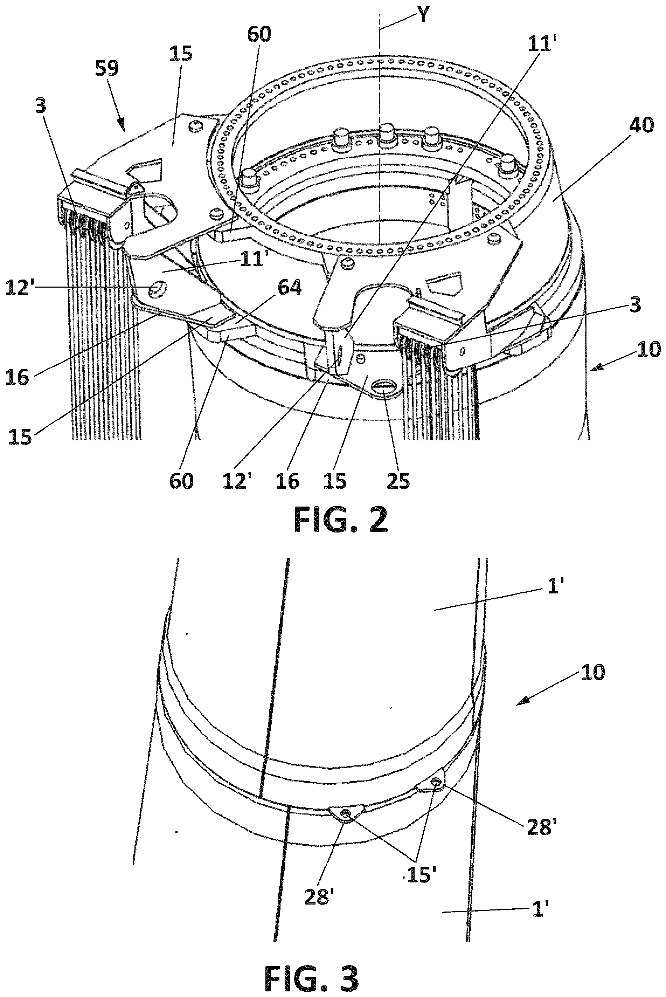

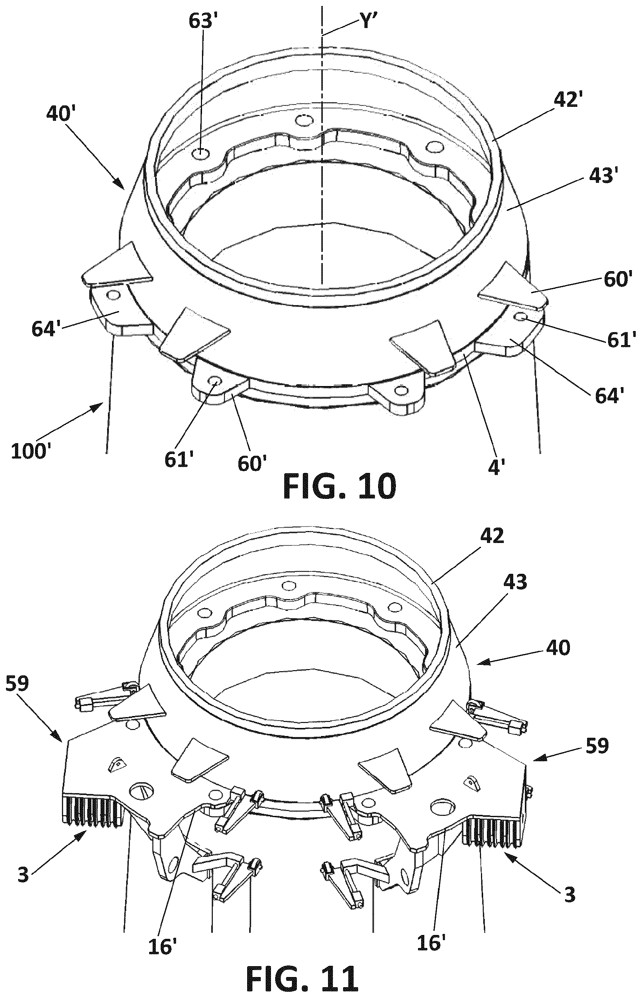

Preferably, as shown in Figure 2 for the embodiment wherein the tower is a "concrete-steel hybrid" tower and in Figure 10 wherein for the embodiment wherein the tower is a full concrete tower, the first attaching means (60, 61, 60', 61') comprises outwardly protruding elements (60, 61, 60', 61') with regard to the lower flange (41, 41').

For the embodiment wherein the tower is a "full concrete" tower as shown in Figure 10, the first attaching means (60', 61') are disposed on the lower flange (41).

Additionally, for the embodiment wherein the tower is a "concrete-steel hybrid" tower as shown in Figure 2, the first attaching means (60, 61, 60', 61') can also be disposed on the upper flange (42).

Preferably, the first attaching means (60, 61, 60', 61') comprises lugs (60, 60'), more preferably horizontal lugs (60, 60').

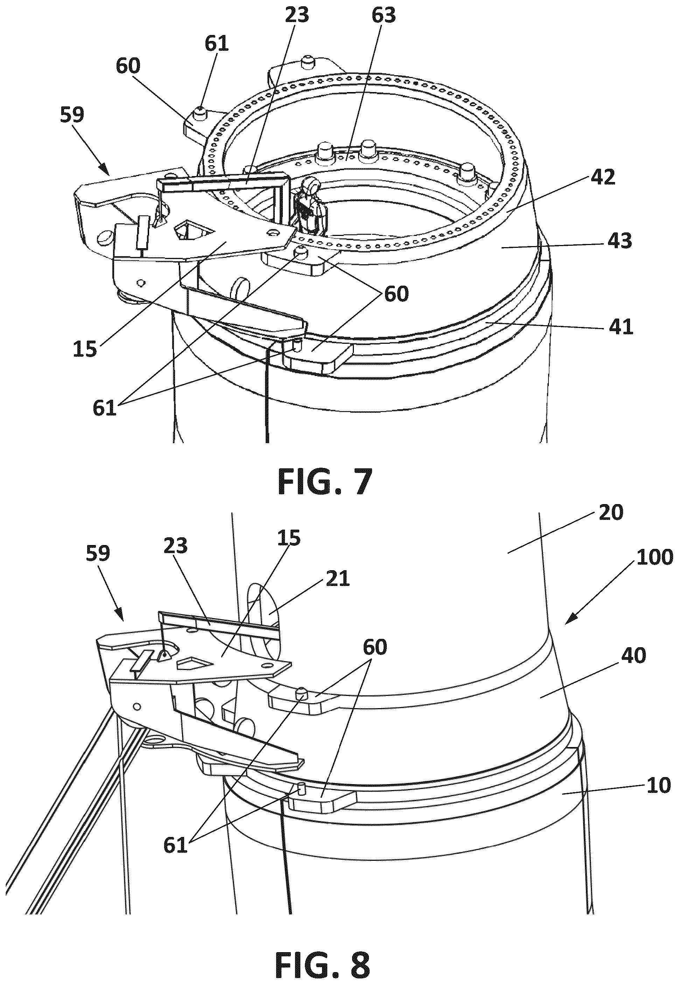

Preferably, the first attaching (61) means comprises pins (61) antagonist to holes disposed in the first auxiliary lifting structure (3), as shown in Figure 8.

Also preferably, the first attaching (61') means comprises holes (61') antagonist to pins disposed in the first auxiliary lifting structure (3), as shown in Figure 10.

Preferably, the first attaching means configured to attach a lifting structure (2) at least to the adapter (40, 40') disposed on the first tower section (10) and fix the lifting structure (2) in a first position (P1') located at a first height (H1') along the height of the tower, further comprises vertical lugs (11') comprising holes (12') being parallel, in use, to vertical lugs (11) comprising holes (12) disposed on the lifting structure (2). In this way, in the first position (P1'), the holes (12') of the vertical lugs (11') of the adapter (40, 40') are coincident with the holes (12) of the vertical lugs (11) of the lifting structure (2). Thus, bolts (17) of lifting structure (2) passing through the holes (12, 12') allow to attach the lifting structure (2) at least to the first tower section (10) and fix the lifting structure (2) in the first position (P1') located at a first height (H1').

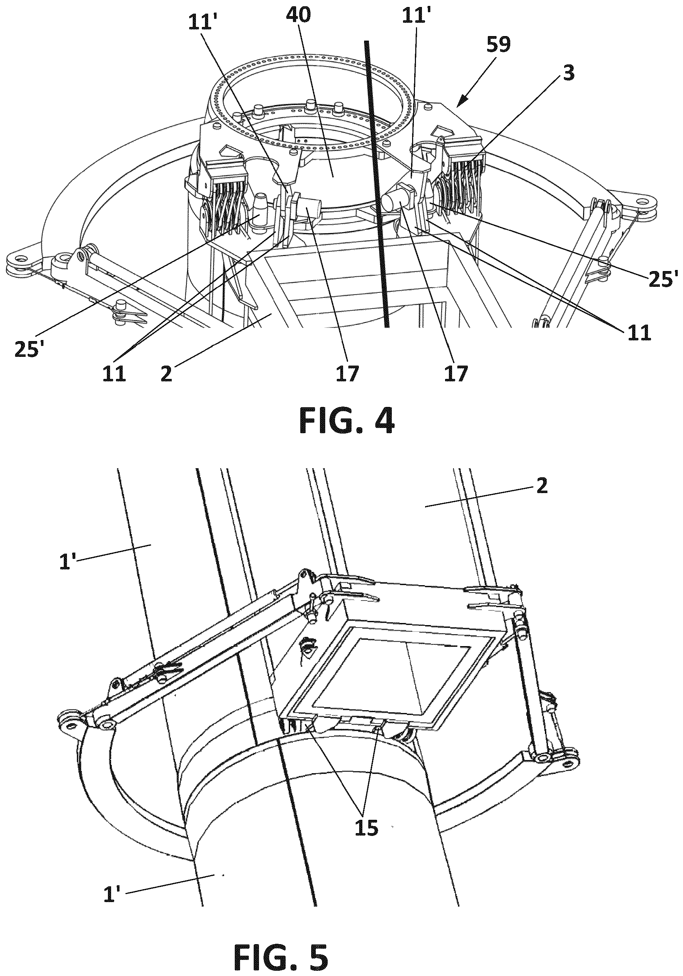

Preferably, the positioning means (25) configured to centre the lifting structure (2) with the first tower section (10) in the first position (P1') located at a first height (H1') comprise holes (25) disposed on horizontal lugs (15) of the adapter (40, 40') (shown in Figure 2) which in use, are antagonist to bolts (25') of the lifting structure (2), as shown in Figure 4.

Preferably, the first auxiliary lifting structure (3) comprises two auxiliar block sheaves (59), which in turn comprises two cargo blocks (3),wherein the auxiliar block sheaves (59) are fixed to the adapter (40, 40') in the lugs (60) of the adapter (40, 40') protruding outwardly from the lower flange (41, 41') by means of the horizontal lugs (15) of the auxiliar block sheaves (59).

The adapter (40, 40') is further configured to detachably connect the first auxiliary lifting structure (3), the attaching means (11', 12'), preferably a horizontal hole, disposed between the horizontal lugs (15), and the positioning means (25'), preferably the vertical holes (25'), also disposed on the horizontal lugs (15).

According to the terminology used in this application, the first tower section (10) is configured to be lifted by means of a first lifting structure (1) which is supported on a ground next to the foundation (200) and the second tower section (20) or the at least one wind turbine component (30) is configured to be lifted by means of the lifting structure (2) being a second lifting structure (2) attached to the first tower section (10) and fixed in a first position (P1') located at a first height (H1') along the height of the tower.

Optionally, the tower (100, 100') further comprises connecting means configured to connect the second tower section (20) or the at least one wind turbine component (30) to the first tower section (10), preferably to the adapter (40, 40').

Optionally, the tower (100, 100') comprises connecting means configured to connect the at least one additional wind turbine component (50) to the second tower section (20).

In a first embodiment, the tower (100, 100') is a "full concrete" tower and the first height is approximately the height of the first tower section (10) and the rest of wind turbine components (30, 50) located above the first tower section (10) are lifted by the lifting structure (2) until the whole wind turbine is assembled. Preferably, the first tower section (10) further comprises at least two concrete sections and a post-tensioning system.

Preferably, at least one of the at least two concrete sections of the first tower section (10) further comprises light beacons (70), preferably disposed in an upper end of the at least one concrete section, wherein the light beacons (70) are configured to make the section visible.

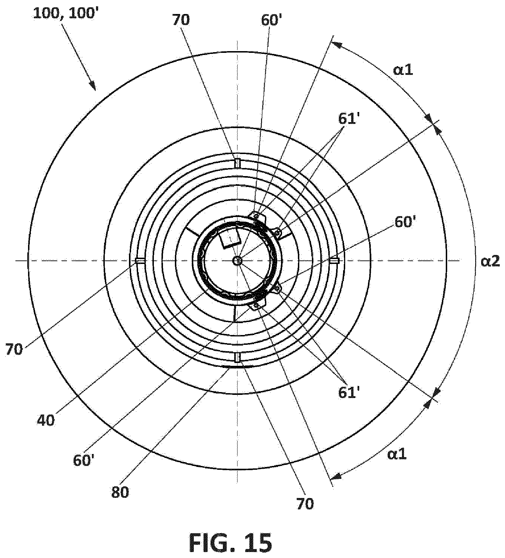

Optionally, the tower (100, 100') comprises a door (80), wherein in the case when the first attaching means (60, 61, 60', 61') comprise at least one couple of attaching means (60, 61, 60', 61') spaced apart by a first angle (α1) or at least two couples of attaching means (60, 61, 60', 61'), the first couple of attaching means (60, 61, 60', 61') spaced apart by a second angle (α2) from a second couple of attaching means (60, 61, 60', 61'), a bisector between the at least one couple of attaching means, or between the first and the second couple of attaching means (60, 61, 60', 61') forms an angle of 90° with respect to the door (80) of the tower (100, 100'), as shown in Figure 15.

In a second embodiment, the tower (100, 100') is a "concrete-steel hybrid" tower comprising a first tower section (10) comprising at least two concrete segments (1') and further comprising a second tower section (20) made of steel, wherein the first height is approximately the height of the first tower section (10) and the second tower section (20) and the at least one turbine component (30) being part of a subset of wind turbine components (30, 50) that are lifted by the lifting structure (2) for assembling the whole wind turbine.

In the second embodiment, the tower (100, 100') further comprises:
- first additional attaching means (26') configured to attach the second lifting structure (2) to the second tower section (20) and fix the second lifting structure (2) in a second position (P2') located at a second height (H2') along the height of the tower (100, 100') upper than the first position (P1') located at a first height (H1'). Preferably, the first additional attaching means (26') comprises holes (26') disposed in the steel second tower section (2) which, in use, are antagonist to pins (26) disposed on auxiliary arms (27) of the second lifting structure (2). In particular, the first additional attaching means (26') are disposed in an upper end of the second tower section (20), so that the uppermost movements of the second lifting structure (2) are similar to the movements of the upper end of the second tower section (20).

In the first and second embodiments, the tower (100, 100') further comprises:
- second additional attaching means (28') configured to attach the second lifting structure (2) to the first tower section (10) and fix the second lifting structure (2) in a third position (P3') located at a third height (H3) along the height of the tower (100, 100') lower than the first position (P1') located at the first height (H1'). The second additional attaching means (28') are disposed preferably in a region proximate to a horizontal joint between two concrete segments (1'). Preferably, the second additional attaching means (28') comprises holes (28') disposed on horizontal lugs (15') disposed along the first tower section (10) (shown in Figure 3), preferably between two concrete segments (1'), which in use, are antagonist to bolts (25') of the lifting structure (2), so that there is a second attachment location along the height of the first tower section (10), one attachment point to the adapter (40, 40') and another attachment point in a location lower than the adapter (40, 40') between two concrete segments (1') for further stability of the second lifting structure (2).

The adapter (40, 40') comprises attaching means (not shown) for fixing a telescopic crane (22) configured to lift, at least partially, the auxiliary lifting structure (3) to the adapter (40, 40'), wherein the second tower section (20) comprises openings (21) configured to allow the passage of an arm (23) of the telescopic crane (22) fixed to the adapter (40, 40') and configured to install or dismantle the first auxiliary lifting structure (3) from the adapter (40, 40').

Preferably, the adapter (40') further comprises stoppers (62), preferably disposed on the intermediate wall (43') for limiting the movement of the auxiliary lifting structure (3) when is being installed.

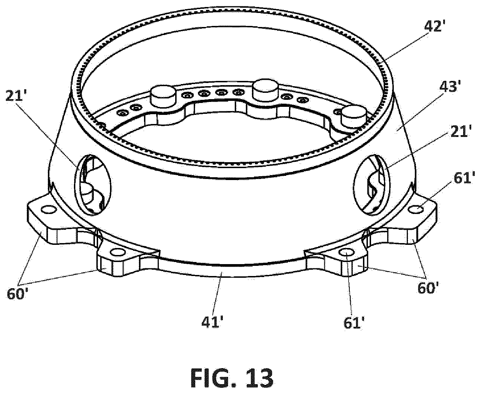

In the first embodiment, as shown in Figure 13 for another configuration, the adapter (40) comprises openings (21') configured to allow the passage of an arm (23) of a telescopic crane (22) fixed to the adapter (40) or to the first tower section (1) and configured to install or dismantle a first auxiliary lifting structure (3) from the adapter (40), preferably two openings (21') disposed in the intermediate wall (43, 43') of the adapter (40), each of them (21') disposed between each couple of attaching means (60', 61').

## Claims

1. Wind turbine comprising:
- a foundation (200);
- a tower (100, 100') which in turn comprises a height, at least a first concrete tower section (10) and an adapter (40, 40'); and
- at least one wind turbine component (30);
wherein the adapter (40, 40') is disposed on the upper part of the first tower section (10) and below a second tower section (20) or disposed on the upper part of the first tower section (10) and below the at least one wind turbine component (30);
wherein the adapter (40, 40') further comprises:
• first attaching means (60, 61, 60', 61') configured, in use, to attach a lifting structure (2) to the adapter (40, 40'), wherein the lifting structure is configured to lift the second tower section (20) or the at least one wind turbine component (30), and wherein the first attaching means (60, 61, 60', 61') are configured to bear, at least partially, the vertical loads of the lifting structure (2); and
wherein the adapter (40, 40') comprises a lower flange (41, 41') configured to be connected to an upper part of the first tower section (10), an upper flange (42, 42') configured to be connected to the second tower section (20) or to the at least one wind turbine component (30) and an intermediate wall (43, 43') disposed between the lower flange (41, 41') and the upper flange (42, 42').

2. The wind turbine of claim 1, wherein the first attaching means (60, 61, 60', 61') comprise outwardly protruding elements (60, 61, 60', 61') with regard to the lower flange (41, 41').

3. The wind turbine of any one of claims 1 or 2, wherein the first attaching means (60, 61, 60', 61') comprise a substantially horizontal upper surface (64, 64') configured, in use, to match with a substantially horizontal lower surface (16, 16') of an auxiliary lifting structure (3) configured to lift the lifting structure (2) to a first position (P1') located at a first height (H1') along the height of the tower (100, 100').

4. The wind turbine of any one of claims 1 to 3, wherein the first attaching means (60, 61, 60', 61') are disposed radially with regard to an axis (Y, Y') of the adapter (40, 40').

5. The wind turbine of any one of claims 1 to 4, wherein the first attaching means (60, 61, 60', 61') are disposed on the lower flange (41, 41').

6. The wind turbine of any one of claims 1 to 5, wherein the first attaching means (60, 61, 60', 61') comprise at least one couple of attaching means spaced apart by a first angle (α1), being the first angle (α1) at least 20°.

7. The wind turbine of claim 6, wherein the first attaching means (60, 61, 60', 61') comprise at least two couples of attaching means, the attaching means of each couple of attaching means spaced apart by the first angle (α1), being the first angle (α1) at least 20°.

8. The wind turbine of any one of preceding claims, wherein the first attaching means (60, 61, 60', 61') comprise lugs (60, 60'), preferably horizontal lugs (60, 60').

9. The wind turbine of any one of previous claims further comprising openings (21') configured, in use, to allow the passage of an arm (23) of a telescopic crane (22) fixed to the adapter (40) and configured, in use, to install or dismantle a first auxiliary lifting structure (3) from the adapter (40).

10. The wind turbine of claim 3, wherein the first attaching means (60, 61, 60', 61') configured to attach a lifting structure (2) to the adapter (40, 40') and to bear, at least partially, the vertical loads of the lifting structure (2), are configured to fix the lifting structure (2) in the tower (100, 100'), in the first position (P1') located at a first height (H1') along the height of the tower (100, 100'), from where the lifting structure (2) lifts the second tower section (2) or the at least one wind turbine component (30) disposed on the ground.

11. The wind turbine of claim 10, wherein the at least first concrete tower section (10) further comprises light beacons (70), preferably equidistributed along a circumference of the at least a first concrete section, wherein the light beacons (70) are configured to make the section visible.

12. The wind turbine of any of claims 10-11, further comprising a door (80), wherein attaching means (60, 61, 60', 61') form an angle between 80° and 100° with respect to the door (80) of the tower (100, 100'), preferably 90°.

13. A wind farm comprising at least one wind turbine according to any one of the preceding claims.

## Patentansprüche

1. Windturbine, umfassend:
- ein Fundament (200);
- einen Turm (100, 100'), der seinerseits eine Höhe, mindestens einen ersten Betonturmabschnitt (10) und einen Adapter (40, 40') umfasst; und
- mindestens eine Windturbinenkomponente (30);
wobei der Adapter (40, 40') am oberen Teil des ersten Turmabschnitts (10) und unterhalb eines zweiten Turmabschnitts (20) angeordnet ist oder am oberen Teil des ersten Turmabschnitts (10) und unterhalb der mindestens einen Windturbinenkomponente (30) angeordnet ist;
wobei der Adapter (40, 40') ferner Folgendes umfasst:
• erste Anbringungsmittel (60, 61, 60', 61'), die dazu konfiguriert sind, bei Verwendung eine Anhebestruktur (2) an dem Adapter (40, 40') anzubringen, wobei die Anhebestruktur dazu konfiguriert ist, den zweiten Turmabschnitt (20) oder die mindestens eine Windturbinenkomponente (30) anzuheben, und wobei die ersten Anbringungsmittel (60, 61, 60', 61') dazu konfiguriert sind, die vertikalen Lasten der Anhebestruktur (2) mindestens teilweise aufzunehmen; und
wobei der Adapter (40, 40') einen unteren Flansch (41, 41'), der dazu konfiguriert ist, mit dem oberen Teil des ersten Turmabschnitts (10) verbunden zu werden, einen oberen Flansch (42, 42'), der dazu konfiguriert ist, mit dem zweiten Turmabschnitt (20) oder mit der mindestens einen Windturbinenkomponente (30) verbunden zu werden, und eine Zwischenwand (43, 43') umfasst, die zwischen dem unteren Flansch (41, 41') und dem oberen Flansch (42, 42') angeordnet ist.

2. Windturbine nach Anspruch 1, wobei die ersten Anbringungsmittel (60, 61, 60', 61') Elemente (60, 61, 60', 61') umfassen, die in Bezug auf den unteren Flansch (41, 41') nach außen vorstehen.

3. Windturbine nach einem der Ansprüche 1 oder 2, wobei die ersten Anbringungsmittel (60, 61, 60', 61') eine im Wesentlichen horizontale obere Fläche (64, 64') umfassen, die dazu konfiguriert ist, bei Verwendung mit einer im Wesentlichen horizontalen unteren Fläche (16, 16') einer Hilfsanhebestruktur (3) zusammenzupassen, die dazu konfiguriert ist, die Anhebestruktur (2) in eine erste Position (P1') anzuheben, die sich auf einer ersten Höhe (H1') entlang der Höhe des Turms (100, 100') befindet.

4. Windturbine nach einem der Ansprüche 1 bis 3, wobei die ersten Anbringungsmittel (60, 61, 60', 61') radial in Bezug auf eine Achse (Y, Y') des Adapters (40, 40') angeordnet sind.

5. Windturbine nach einem der Ansprüche 1 bis 4, wobei die ersten Anbringungsmittel (60, 61, 60', 61') am unteren Flansch (41, 41') angeordnet sind.

6. Windturbine nach einem der Ansprüche 1 bis 5, wobei die ersten Anbringungsmittel (60, 61, 60', 61') mindestens ein Paar von Anbringungsmitteln umfassen, die um einen ersten Winkel (α1) voneinander beabstandet sind, wobei der erste Winkel (α1) mindestens 20° beträgt.

7. Windturbine nach Anspruch 6, wobei die ersten Anbringungsmittel (60, 61, 60', 61') mindestens zwei Paare von Anbringungsmitteln umfassen, wobei die Anbringungsmittel jedes Paares von Anbringungsmitteln um den ersten Winkel (α1) voneinander beabstandet sind, wobei der erste Winkel (α1) mindestens 20° beträgt.

8. Windturbine nach einem der vorhergehenden Ansprüche, wobei die ersten Anbringungsmittel (60, 61, 60', 61') Laschen (60, 60') umfassen, vorzugsweise horizontale Laschen (60, 60').

9. Windturbine nach einem der vorhergehenden Ansprüche, ferner umfassend Öffnungen (21'), die dazu konfiguriert sind, bei Verwendung den Durchgang eines Arms (23) eines am Adapter (40) fixierten Teleskopkrans (22) zu ermöglichen, und die dazu konfiguriert sind, bei Verwendung eine erste Hilfsanhebestruktur (3) am Adapter (40) anzubringen oder von diesem zu demontieren.

10. Windturbine nach Anspruch 3, wobei die ersten Anbringungsmittel (60, 61, 60', 61'), die dazu konfiguriert sind, eine Anhebestruktur (2) an dem Adapter (40, 40') anzubringen und mindestens teilweise die vertikalen Lasten der Anhebestruktur (2) zu tragen, dazu konfiguriert sind, die Anhebestruktur (2) im Turm (100, 100') zu fixieren, in der ersten Position (P1'), die sich auf einer ersten Höhe (H1') entlang der Höhe des Turms (100, 100') befindet, von wo aus die Anhebestruktur (2) den zweiten Turmabschnitt (2) oder die mindestens eine am Boden angeordnete Windturbinenkomponente (30) anhebt.

11. Windturbine nach Anspruch 10, wobei der mindestens erste Betonturmabschnitt (10) ferner Lichtbaken (70) umfasst, die vorzugsweise gleichmäßig entlang eines Umfangs des mindestens einen ersten Betonabschnitts verteilt sind, wobei die Lichtbaken (70) dazu konfiguriert sind, den Abschnitt sichtbar zu machen.

12. Windturbine nach einem der Ansprüche 10-11, ferner umfassend eine Tür (80), wobei Anbringungsmittel (60, 61, 60', 61') einen Winkel zwischen 80° und 100°, vorzugsweise 90°, in Bezug auf die Tür (80) des Turms (100, 100') bilden.

13. Windpark, umfassend mindestens eine Windturbine nach einem der vorhergehenden Ansprüche.

## Revendications

1. Éolienne comprenant :
- une fondation (200) ;
- un mât (100, 100') comprenant à son tour une hauteur, au moins une première section de mât en béton (10) et un adaptateur (40, 40') ; et
- au moins un élément d'éolienne (30) ;
dans lequel l'adaptateur (40, 40') est disposé sur la partie supérieure de la première section de mât (10) et en dessous une seconde section de mât (20) ou disposé sur la partie supérieure de la première section de mât (10) et en dessous l'au moins un élément d'éolienne (30) ;
dans laquelle l'adaptateur (40, 40') comprend en outre :
• des premiers moyens de fixation (60, 61, 60', 61') configurés, en utilisation, pour fixer une structure de levage (2) à l'adaptateur (40, 40'), dans laquelle la structure de levage est conçue pour lever la seconde section de mât (20) ou l'au moins un élément d'éolienne (30), et dans laquelle les premiers moyens de fixation (60, 61, 60', 61') sont conçus pour supporter, au moins partiellement, les charges verticales de la structure de levage (2) ; et
dans laquelle l'adaptateur (40, 40') comprend une bride inférieure (41, 41') conçue pour être reliée à une partie supérieure de la première section de mât (10), une bride supérieure (42, 42') conçue pour être reliée à la seconde section de mât (20) ou à l'au moins un élément d'éolienne (30) et une paroi intermédiaire (43, 43') disposée entre la bride inférieure (41, 41') et la bride supérieure (42, 42').

2. Éolienne selon la revendication 1, dans laquelle les premiers moyens de fixation (60, 61, 60', 61') comprennent des éléments faisant saillie vers l'extérieur (60, 61, 60', 61') par rapport à la bride inférieure (41, 41').

3. Éolienne selon l'une quelconque des revendications 1 ou 2, dans laquelle les premiers moyens de fixation (60, 61, 60', 61') comprennent une surface supérieure sensiblement horizontale (64, 64') conçue, en utilisation, pour correspondre à une surface inférieure sensiblement horizontale (16, 16') d'une structure de levage auxiliaire (3) conçue pour lever la structure de levage (2) jusqu'à une première position (P1') située à une première hauteur (H1') le long de la hauteur du mât (100, 100').

4. Éolienne selon l'une quelconque des revendications 1 à 3, dans laquelle les premiers moyens de fixation (60, 61, 60', 61') sont disposés radialement par rapport à un axe (Y, Y') de l'adaptateur (40, 40').

5. Éolienne selon l'une quelconque des revendications 1 à 4, dans laquelle les premiers moyens de fixation (60, 61, 60', 61') sont disposés sur la bride inférieure (41, 41').

6. Éolienne selon l'une quelconque des revendications 1 à 5, dans laquelle les premiers moyens de fixation (60, 61, 60', 61') comprennent au moins une paire de moyens de fixation espacés d'un premier angle (α1), le premier angle (α1) étant d'au moins 20°.

7. Éolienne selon la revendication 6, dans laquelle les premiers moyens de fixation (60, 61, 60', 61') comprennent au moins deux paires de moyens de fixation, les moyens de fixation de chaque paire de moyens de fixation espacés d'un premier angle (α1), le premier angle (α1) étant d'au moins 20°.

8. Éolienne selon l'une quelconque des revendications précédentes, dans laquelle les premiers moyens de fixation (60, 61, 60', 61') comprennent des ergots (60, 60'), de préférence des ergots horizontaux (60, 60').

9. Éolienne selon l'une quelconque des revendications précédentes comprenant en outre des ouvertures (2T) conçues, en utilisation, pour permettre le passage d'un bras (23) d'une grue télescopique (22) fixée à l'adaptateur (40) et conçue, en utilisation, pour installer ou démonter une première structure de levage auxiliaire (3) de l'adaptateur (40).

10. Éolienne selon la revendication 3, dans laquelle les premiers moyens de fixation (60, 61, 60', 61') conçus pour fixer une structure de levage (2) à l'adaptateur (40, 40') et pour supporter, au moins partiellement, les charges verticales de la structure de levage (2), sont conçus pour fixer la structure de levage (2) dans le mât (100, 100'), dans la première position (P1') située à une première hauteur (H1') le long de la hauteur du mât (100, 100'), d'où la structure de levage (2) lève la seconde section de mât (2) ou l'au moins un élément d'éolienne (30) disposé sur le sol.

11. Éolienne selon la revendication 10, dans laquelle la au moins première section de mât en béton (10) comprend en outre des balises lumineuses (70), de préférence distribuées de manière égale le long d'une circonférence du au moins une première section de béton, dans laquelle les balises lumineuses (70) sont conçues pour rendre la section visible.

12. Éolienne selon l'une quelconque des revendications 10 à 11, comprenant en outre une porte (80), dans laquelle les moyens de fixation (60, 61, 60', 61') forment un angle compris entre 80° et 100° par rapport à la porte (80) du mât (100, 100'), de préférence 90°.

13. Parc éolien comprenant au moins une éolienne selon l'une quelconque des revendications précédentes.
